# EUROPÄISCHE PATENTSCHRIFT

(11) **EP 2 561 603 B1**
(45) Veröffentlichungstag und Bekanntmachung des Hinweises auf die Patenterteilung: **04.09.2019**
(21) Anmeldenummer: 11707815.4
(22) Anmeldetag: 01.03.2011
(51) Int. Cl.: H02M 1/32, G01F 1/84

(54) **TREIBERSCHALTUNG FÜR EINEN MESSWANDLER SOWIE DAMIT GEBILDETES MESSSYSTEM**
DRIVER CIRCUIT FOR A MEASURING TRANSDUCER AND MEASURING SYSTEM DESIGNED HAVING SAME
CIRCUIT D'EXCITATION POUR UN TRANSFORMATEUR DE MESURE AINSI QUE SYSTÈME DE MESURE FORMÉ AVEC CELUI-CI

(30) Priorität: 19.04.2010 DE 102010015586
(43) Veröffentlichungstag der Anmeldung: 27.02.2013
(73) Patentinhaber: Endress+Hauser Flowtec AG, 4153 Reinach (CH)
(72) Erfinder: LALLA, Robert, 79541 Lörrach (DE)
(74) Vertreter: Andres, Angelika Maria
(86) Internationale Anmeldenummer: PCT/EP2011/052968
(87) Internationale Veröffentlichungsnummer: WO 2011/131399

(56) Entgegenhaltungen:
- WO-A2-2006/072541
- GB-A- 2 306 064
- US-A1- 2009 021 228

## Beschreibung

Die Erfindung betrifft eine Treiberschaltung für einen Aktor sowie eine damit gebildete, insb. eigensichere, Umformer-Elektronik bzw. ein, insb. als Zweileiter-Feldgerät ausgebildetes, Meßsystem mit einer solchen Umformer-Elektronik.

In der industriellen Meß- und Automatisierungstechnik werden zur Erzeugung von Meßgrößen analog oder digital repräsentierenden Meßwertsignalen vor Ort oder prozeßnah installierte Meßsysteme - so genannte Feldgeräte - eingesetzt. Bei den jeweils zu erfassenden Meßgrößen kann es sich beispielsweise um einen >Massendurchfluß bzw. eine Massendurchflußrate, eine Dichte, eine Viskosität, einen Füll- oder einen Grenzstand, einen Druck, eine Temperatur etc., eines strömungsfähigen, beispielsweise also flüssigen, pulver-, dampf- oder gasförmigen, Mediums handeln, das in einem entsprechenden Prozeßbehälter, wie z.B. einer Rohrleitung oder einem Tank, geführt bzw. vorgehalten wird. Weiterführende Beispiele für derartige, dem Fachmann an und für sich bekannte Feldgeräte sind u.a. in der DE-A 39 34 007, der EP-A 1 058 093, der EP-A 1 158 289, der EP-A 525 920, der EP-A 984 248, der US-A 37 64 880, der US-A 38 78 725, der US-A 43 08 754, der US-A 43 17 116, der US-A 44 68 971, der US-A 45 24 610, der US-A 45 74 328, der US-A 45 94 584, der US-A 46 17 607, der US-A 46 56 353, der US-A 47 68 384, der US-A 48 50 213, der US-A 49 26 340, der US-A 50 24 104, der US-A 50 52 230, der US-A 50 68 592, der US-A 51 31 279, der US-A 52 07 101, der US-A 52 31 884, der US-A 53 59 881, der US-A 53 63 341, der US-A 54 16 723, der US-A 54 69 748, der US-A 55 35 243, der US-A 56 04 685, der US-A 56 72 975, der US-A 56 87 100, der US-A 57 42 225, der US-A 57 42 225, der US-A 57 96 011, der US-A 59 59 372, der US-A 60 06 609, der US-A 60 14 100, der US-A 61 40 940, der US-B 62 36 322, der US-B 62 69 701, der US-B 62 85 094, der US-B 63 11 136, der US-B 63 97 683, der US-B 64 76 522, der US-B 64 80 131, der US-B 64 87 507, der US-B 65 12 358, der US-B 65 35 161, der US-B 65 74 515, der US-B 65 77 989, der US-B 66 62 120, der US-B 67 69 301, der US-B 67 76 053, der US-B 67 99 476, der US-B 72 00 503, der US-B 76 30 844, der US-A 2008/0015799, der WO-A 00/14 485, der WO-A 00/26739, der WO-A 00/36 379, der WO-A 00/48157, der WO-A 00/67087, der WO-A 01/02816, der WO-A 02/086426, der WO-A 02/103327, der WO-A 02/45045, der WO-A 2004/048905, der WO-A 2005/040735, der WO-A 2006/130087, WO-A 2010/014102, der WO-A 88/02476, der WO-A 88/02853, oder der WO-A 95/16897 ausführlich und detailliert beschrieben. Die darin gezeigten Meßsysteme weisen jeweils einen physikalisch-elektrischen Meßwandler zum Erfassen der jeweiligen Meßgröße(n) sowie eine damit elektrisch verbundene, zumeist von extern mit elektrischer Energie versorgte Umformer-Elektronik mit einer den Meßwandler steuernden Treiberschaltung sowie einer Meß- und Betriebsschaltung zum Erzeugen von die wenigstens eine Meßgröße repräsentierenden Meßwerten auf.

Der Meßwandler ist jeweils dafür vorgesehen, in eine Wandung des das Medium jeweils führenden Behälters oder der in den Verlauf einer das Medium jeweils führenden Leitung, beispielsweise eine Rohrleitung, eingesetzt zu werden, und dient dazu, wenigstens ein die wenigstens eine Meßgröße repräsentierendes elektrisches Meßsignal zu erzeugen. Dafür wird der jeweilige Meßwandler, mithin ein darin vorgesehener Aktor, im Betrieb des Meßsystems von einem von der in der Umformer-Elektronik vorgesehenen Treiberschaltung generierten, beispielsweise bipolaren und/oder zumindest zeitweise periodischen, Treibersignal so angesteuert, daß er in einer für die Messung geeigneten Weise auf das Medium einwirkt, um dort mit der zu erfassenden Meßgröße korrespondierende, in das wenigstens eine Meßsignal entsprechend konvertierbare Reaktionen hervorzurufen. Das Treibersignal kann dabei beispielsweise ein hinsichtlich einer Stromstärke, einer Spannungshöhe und/oder einer Signalfrequenz entsprechend geregeltes Analog- oder auch ein geeignet getaktetes Binärsignal sein. Als Beispiele für solche aktiven, also ein elektrisches Treibersignal mittels eines, beispielsweise überwiegend induktiven, Aktors in einen dem Erfassen der Meßgröße dienlichen Meßeffekt entsprechend umsetzende, Meßwandler sind im besonderen nach dem Echoprinzip arbeitender HF-Sende-/Empfangswandler oder dem Messen von strömenden Medien dienende Durchfluß-Meßwandler mit wenigstens einer vom Treibersignal angesteuerten, Magnetfeld erzeugenden Spule, beispielsweise auch Meßwandler vom Vibrationstyp mit wenigstens einem vibrierenden Meßrohr und einem darauf einwirkenden elektro-mechanischen Schwingungserreger, oder wenigstens einem vom Treibersignal angesteuerten Ultraschallsender etc. zu nennen. Zwecks des Erzeugens von die mittels des Meßsystems zu erfassende Meßgröße(n) repräsentierenden Meßwerten ist das wenigstens eine Meßsignal im weiteren Verlauf einer in der Umformer-Elektronik vorgesehenen, beispielsweise auch mittels eines Mikrocontrollers und/oder mittels eines digitalen Signalprozessors gebildeten, Meß- und Betriebsschaltung zugeführt. Zur Aufnahme der Umformer-Elektronik umfassen die Feldgeräte ferner ein Elektronik-Gehäuse, das, wie z.B. in der US-A 63 97 683 oder der WO-A 00/36379 vorgeschlagen, vom Meßaufnehmer entfernt angeordnet und mit diesem nur über eine flexible Leitung verbunden sein kann oder das, wie z.B. auch in der EP-A 903 651 oder der EP-A 1 008 836 gezeigt, direkt am Meßwandler oder einem den Meßwandler separat einhausenden Meßwandler-Gehäuse angeordnet ist.

Meßsysteme der beschriebenen Art sind ferner üblicherweise über ein an die Umformer-Elektronik angeschlossenes Datenübertragungs-System miteinander und/oder mit entsprechenden Prozeß-Leitrechnern verbunden, wohin sie die Meßwertsignale z.B. via (4 mA bis 20 mA)-Stromschleife und/oder via digitalen Daten-Bus senden und/oder von denen sie Betriebsdaten und/oder Steuerbefehle in entsprechender Weise empfangen. Als Datenübertragungs-Systeme dienen hierbei, insb. serielle, Feldbus-Systeme, wie z.B. PROFIBUS-PA, FOUNDATION FIELDBUS sowie die entsprechenden Übertragungs-Protokolle. Mittels der Prozeß-Leitrechner können die übertragenen Meßwertsignale weiterverarbeitet und als entsprechende Meßergebnisse z.B. auf Monitoren visualisiert oder z.B. auch in der Prozeßführung dienliche Steuersignale für Stellgeräte, wie z.B. Magnet-Ventile, Elektro-Motoren etc., umgewandelt werden. Meßsysteme der in Rede stehenden Art sind zudem oftmals auch so ausgebildet, daß sie den Forderungen nach intrinsischer Explosionssicherheit genügen. Demnach werden die Feldgeräte mit einer solch niedrigen elektrischen Leistung betrieben, daß mangels des Erreichens der Zündbedingungen Funken oder Lichtbogen elektrisch nicht ausgelöst werden können. Eigensicherere Explosionsschutz ist beispielsweise nach den Europäischen Normen EN 50 014 und EN 50 020 gegeben bzw. der der darin definierten Zündschutzart "Eigensicherheit (Ex-i)" ist dann entsprochen, wenn elektronische Vorrichtungen, mithin Feldgeräte, so ausgebildet sind, daß darin maximal auftretende elektrische Ströme, Spannungen und Leistungen vorgegebene Strom-, Spannungs- und Leistungsgrenzwerte keinesfalls überschreiten. Nämlich Grenzwerte sind jeweils so gewählt, daß im Fehlerfall, etwa einem einen Kurzschluß, die maximal freigesetzte Energie nicht dazu ausreicht, einen zündfähigen Funken zu erzeugen, bzw. die maximal umgesetzte elektrische Leistung 1 W (= Watt) nicht übersteigt. Die Spannung kann z.B. durch Z-Dioden, der Strom z.B. durch Widerstände und die Leistung durch entsprechende Kombination von spannungs- und strombegrenzenden Komponenten unter den vorgegebenen Grenzwerten gehalten werden. Bei modernen Meßsystem der in Rede stehenden Art handelt es sich zudem oftmals um so genannte Zweileiter-Feldgeräte, also solche Feldgeräte, bei denen die Umformer-Elektronik mit der externen elektrischen Energieversorgung unter Bildung einer Stromschleife lediglich über ein einziges Paar elektrischer Leitungen elektrisch verbunden und von einem von der Energieversorgung gespeisten Versorgungsstrom durchflossen ist und bei denen die Umformer-Elektronik auch den momentanen Meßwert über dasselbe Paar elektrischer Leitungen an eine in der externen elektrischen Energieversorgung vorgesehene und/oder mit dieser elektrisch gekoppelte Auswerteeinheit überträgt. Die Umformer-Elektronik umfaßt dabei eine sogenannte Zweileiter-Anschlußschaltung mit einem vom Versorgungsstrom durchflossenen Längsstromregler zum Einstellen und/oder Modulieren, insb. Takten, des Versorgungsstroms in Abhängigkeit vom momentanen Meßwert, sowie einen Querstromregler zum Einstellen einer als interne Versorgungsspannung der Umformer-Elektronik dienenden, stabilisierten Eingangsspannung bzw. zum Ableiten eines zur Erzeugung der Meßwerte momentan nicht benötigten, überschüssigen Anteils vom Versorgungsstrom. Beispiele für solche als, ggf. auch eigensichere, Zweileiter-Feldgeräte ausgebildeten Meßsysteme können u.a. der WO-A 05/040735, der WO-A 04/048905, WO-A 02/45045, der WO-A 02/103327, der WO-A 00/48157, WO-A 00/26739, der WO-A 94/20940, der US-B 67 99 476, der US-B 65 77 989, der US-B 66 62 120, der US-B 65 74 515, der US-B 65 35 161, der US-B 65 12 358, der US-B 64 80 131, der US-B 63 11 136, der US-B 62 85 094, der US-B 62 69 701, der US-A 61 40 940, der US-A 60 14 100, der US-A 59 59 372, der US-A 57 42 225, der US-A 56 72 975, der US-A 55 35 243, der US-A 54 16 723, der US-A 52 07 101, der US-A 50 68 592, der US-A 49 26 340, der US-A 46 56 353, der US-A 43 17 116, der US-A 37 64 880, US-A 2008/0015799, US-B 72 00 503, US-B 76 30 844, der WO-A 00/67087, der WO-A 2010/014102, der EP-A 1 147 841, der EP-A 1 058 093, der EP-A 525 920 oder der DE-A 39 34 007 entnommen werden. Gegebenenfalls ist innerhalb der Umformer-Elektronik, wie beispielsweise in der US-A 37 64 880, der US-A 2008/0015799, der US-B 76 30 844 oder der WO-A 2004/048905 beschrieben, noch eine galvanische Trennung vorgesehen, beispielsweise zwischen der interne Treiberschaltung und dem Längsstromregler, um zu vermeiden, daß allfällige, nicht immer sicher vermeidbare Potentialunterschiede zwischen der Anlage, in die das Feldgerät eingesetzt ist, und der externen elektrischen Energieversorgung unkontrolliert abgebaut werden. Traditionell sind solche Zweileiter-Feldgeräten überwiegend so ausgelegt, daß eine auf einen zwischen 4 mA und 20 mA (= Milliampere) liegenden Betrag eingestellte momentane Stromstärke des in dem als Teil einer Stromschleife dienenden einzigen Paar Leitung momentan fließenden Versorgungsstroms gleichzeitig auch den momentan vom Meßsystem erzeugten Meßwert repräsentiert. Infolgedessen besteht ein besonderes Problem von solchen Zweileiter-Feldgeräten auch darin, daß die von der Umformer-Elektronik zumindest nominell umsetzbare bzw. umzusetzende elektrisch Leistung - im folgenden kurz "verfügbare Leistung" - während des Betriebes in praktisch unvorhersehbarer Weise über einen weiten Bereich schwanken kann. Dem Rechnung tragend sind in solchen als Zweileiter-Feldgeräten ausgebildeten Meßsystemen, mithin solchen mit (4 mA bis 20 mA)-Stromschleife, geeignete Maßnahmen zu ergreifen, um die verfügbare, gelegentlich sogar wesentlich weniger als 100 mW betragende, Leistung, angepaßt an die momentane Meß- und Betriebssituation, optimal, mithin möglichst verlustarm, auf die einzelnen Komponenten bzw. elektronischen Baugruppen des Meßsystems, mithin die Treiber- und die Meß- und Betriebsschaltung, zu verteilen. Bei als Zweileiter-Feldgerät ausgelegten Meßsystemen mit aktivem Meßwandler kann die momentan im Meßsystem insgesamt umgesetzte elektrische Leistung, wie u.a. in der US-B 67 99 476, der US-A 60 14 100, US-A 2008/0015799, US-B 72 00 503, US-B 76 30 844, der WO-A 2010/014102 oder der WO-A 02/103327 diskutiert, beispielsweise dadurch optimal im Meßystem genutzt werden, daß die im Meßwandler umgesetzte elektrische Leistung an die momentan verfügbare Leistung - ad hoc oder vorausschauend - angepaßt wird, beispielsweise durch eine entsprechend adaptierte Taktung des Treibersignals und/oder durch Verringern einer maximalen Stromstärke und/oder einer maximalen Spannungshöhe des Treibersignals.

Zur optimalen Verteilung der verfügbaren elektrischen Leistung im Meßsystem ist beispielsweise in den US-A 2008/0015799, US-B 72 00 503, US-B 76 30 844 die Verwendung zweier Spannungsregler vorgeschlagen, von denen ein erster Spannungsregler an einem Reglerausgang eine veränderliche Gleichspannung zum Betreiben der Treiberschaltung und ein zweiter Spannungsregler an einem Reglerausgang eine von vorgenannter Betriebsspannung der Treiberschaltung unabhängige, mithin auf einem vorgebbaren Spannungsniveau im wesentlichen konstant geregelte Gleichspannung zum Betreiben der Meß- und Betriebsschaltung liefern. Mittels der Gleichspannung - die auch einen Betrag, der kleiner als ein Betrag der vorbezeichneten internen Versorgungsspannung der Umformer-Elektronik ist, aufweisen kann - bzw. einer davon abgezweigten Sekundärspannung wird im weiteren Verlauf eine Endstufe betrieben, die ein an einem Signaleingang anliegendes, insb. bipolares und/oder zumindest zeitweise periodisches, Steuersignal in das Treibersignal für den Meßwandler bzw. dessen Aktor konvertiert, mithin als Leistungsverstärker für das Steuersignal wirkt, derart, daß das Treibersignal eine elektrische Leistung aufweist, die höher als eine elektrische Leistung des Steuersignals ist, wobei nicht zuletzt für die eingangs erwähnten Meßwandler vom Vibrationstyp das Treibersignal üblicherweise hinsichtlich seiner Stromstärke möglichst genau einzustellen ist.

Besonders für den vorbeschriebenen Fall, daß im Betrieb eines Meßsystems der in Rede stehenden Art die verfügbare elektrische Leistung infolge eines geringen Betrags der zu erfassenden Meßgröße gleichermaßen gering ist, etwa weniger als 100 mW beträgt, kann die benötigte Stromstärke mittels der Endstufe mitunter nicht mehr eingestellt, und insoweit das Treibersignal nicht mehr mit der erforderlichen Signalqualität geliefert werden, bzw. könnte eine Konvertierung des Steuersignals in ein nämliche Stromstärke aufweisendes Treibersignal infolge von Rückkopplungen im Verbund der Spannungsregler zu einer Überlastung bzw. einer Destabilisierung der gesamten internen Spannungsversorgung führen, einhergehend mit einem zeitweise erhöhten Leistungs- bzw. Energiebedarf allein zur Rückführung des Meßsystems, mithin der Treiberschaltung und des Meßwandlers, in einen wieder stabilen Arbeitspunkt bzw. Betriebszustand.

Ausgehend davon besteht eine Aufgabe der Erfindung darin, eine für Meßsysteme der beschriebenen Art, mithin Zweileiter-Feldgeräte mit aktivem Meßwandler, geeignete, Treiberschaltung anzugeben, die es ermöglicht, möglichst energieeffizient ein hinsichtlich seiner Stromstärke einstellbares Treibersignal auch bei vergleichsweise geringer verfügbarer Leistung im Meßsystem mit einer ausreichend hohen Signalqualität zu generieren.

Zur Lösung der Aufgabe besteht die Erfindung in einer Treiberschaltung gemäß Anspruch 1.

Ferner besteht die Erfindung in einer Umformer-Elektronik mit einer solchen Treiberschaltung und mit einer Meß- und Betriebsschaltung für wenigstens ein von einem einen, beispielsweise induktiven, Aktor, beispielsweise für einen elektro-mechanischen, elektro-akustischen oder elektro-magnetischen Erreger, aufweisenden physikalisch-elektrischen Meßwandler, beispielsweise einem Meßwandler vom Vibrationstyp oder einem HF-Sende-/Empfangswandler, geliefertes Meßsignal.

Darüberhinaus besteht die Erfindung in einem Meßsystem mit einer solchen, beispielsweise auch eigensicheren, Umformer-Elektronik und mit einem sowohl mit deren Treiberschaltung als auch deren Meß- und Betriebsschaltung elektrisch verbundenen physikalisch-elektrischen Meßwandler, beispielsweise einem Meßwandler vom Vibrationstyp mit wenigstens einem vibrierenden Meßrohr, zum Erzeugen wenigstens eines von einer, beispielsweise veränderlichen und/oder schwankenden, physikalischen Meßgröße, beispielsweise einer Massendurchflußrate und/oder einer Dichte und/oder einer Viskosität eines in einer Rohrleitung geführten Fluids oder eines Füllstands eines in einem Behälter vorgehaltenen schüttfähigen Mediums, abhängigen bzw. damit korrespondierenden Meßsignals.

Nach einer ersten Ausgestaltung der Treiberschaltung der Erfindung ist vorgesehen, daß der Spannungsregler an seinem Ausgang eine schwankende elektrische Leistung bereitstellt, beispielsweise derart, daß ein Bedarf des Gleichspannungswandlers an elektrischer Leistung gelegentlich höher ist, als eine am Ausgang des Spannungsreglers momentan verfügbare elektrische Leistung; und/oder daß die Gleichspannung mit einem gelegentlich unterhalb eines als vorgegebenen Spannungsschwellenwert liegenden Betrag liefert.

Nach einer zweiten Ausgestaltung der Treiberschaltung der Erfindung ist vorgesehen, daß die Treiberschaltung weiters einen Überlastdetektor zum Erfassen einer Überlastsituation des Spannungsreglers, beispielsweise durch Vergleichen der vom Spannungsregler am Ausgang gelieferten erste Gleichspannung mit einem dafür vorgegebenen Spannungsschwellenwert und/oder durch Vergleichen der am Ausgang des Spannungsreglers abgegebenen elektrischen Leistung mit einem dafür vorgegebenen Leistungsschwellenwert, und zum Erzeugen eines, beispielsweise auch den Gleichspannungswandler ansteuernden und/oder binären, Lastsignals umfaßt, das mit einem ersten Signalpegel signalisiert, daß der Spannungsregler überlastet ist und/oder daß ein Bedarf des Gleichspannungswandlers an elektrischer Leistung momentan höher ist, als eine am Ausgang des Spannungsreglers momentan verfügbare elektrische Leistung, oder das mit einem vom ersten Signalpegel verschiedenen zweiten Signalpegel signalisiert, daß der Spannungsregler nicht überlastet ist und/oder daß die am Ausgang des Spannungsreglers momentan verfügbare elektrische Leistung zur Deckung des Bedarfs des Gleichspannungswandlers an elektrischer Leistung ausreichend ist und daß der Gleichspannungswandler einen Steuereingang zum An- bzw. Ausschalten des Gleichspannungswandlers aufweist, wobei das vom Überlastdetektor erzeugte Lastsignal dem Steuereingang zugeführt ist. Ferner ist der der Gleichspannungswandler so eingerichtet, daß der Gleichspannungswandler dann, wenn das Lastsignal den ersten Signalpegel angenommen hat, ausgeschaltet ist, derart, daß der Gleichspannungswandler die zweite Gleichspannung mit einem Betrag von weniger als 1 V liefert und/oder einen von der erste Gleichspannung getriebenen effektiven Eingangsstrom von weniger als 100 µA (= Mikroampere) fließen läßt, und daß der Gleichspannungswandler dann, wenn das Lastsignal den zweiten Signalpegel angenommen hat, eingeschaltet ist, derart, daß der Gleichspannungswandler die zweite Gleichspannung mit einem Betrag von mehr als 1 V liefert und/oder einen von der erste Gleichspannung getriebenen effektiven Eingangsstrom von mehr als 0.5 mA fließen läßt. Alternativ oder in Ergänzung dazu ist ferner vorgesehen, das Lastsignal zumindest zeitweise als ein aperiodisches Taktsignal mit veränderlicher Pulslänge und/oder mit veränderlicher Pausenlänge und/oder mit veränderlichen Puls-zu-Pausen-Verhältnis ausgebildet ist, beispielsweise derart, daß eine momentane Pulslänge und/oder eine momentane Pausenlänge und/oder ein momentanes Puls-zu-Pausenlänge-Verhältnis des Lastsignals von der am Ausgang des Spannungsreglers momentan verfügbare elektrische Leistung abhängig ist.

Nach einer dritten Ausgestaltung der Treiberschaltung der Erfindung ist vorgesehen, daß der Gleichspannungswandler als ein, beispielsweise lediglich in einem Pulsfrequenzmodulation-Modus betriebener, Schaltregler ausgebildet ist.

Nach einer vierten Ausgestaltung der Treiberschaltung der Erfindung ist vorgesehen, daß der Gleichspannungswandler als ein, beispielsweise mit einem in seiner Periodendauer modulierten Rechtecksignal getakteter, Abwärtswandler ausgebildet ist.

Nach einer fünften Ausgestaltung der Treiberschaltung der Erfindung ist vorgesehen, daß die Treiberschaltung weiters einen, beispielsweise mittels der zweiten Gleichspannung betriebenen, Digital-zu-Analog-Wandler zum Erzeugen des Steuersignals umfaßt. Diese Ausgestaltung der Erfindung weiterbildend ist ferner vorgesehen, daß mittels der zweiten Gleichspannung eine dazu proportionale Referenzspannung des Digital-zu-Analog-Wandlers gebildet ist.

Nach einer ersten Ausgestaltung der Umformer-Elektronik der Erfindung ist vorgesehen, daß die Meß- und Betriebsschaltung einen Signalgenerator umfaßt, der ein dem Erzeugen des Steuersignals dienendes Digitalsignal erzeugt.

Nach einer zweiten Ausgestaltung der Umformer-Elektronik der Erfindung ist vorgesehen, daß die Umformer-Elektronik weiters eine Zweileiter-Anschlußschaltung zum Anschließen der Umformer-Elektronik an eine davon entfernte Meß- und Versorgungseinheit umfaßt. Diese Ausgestaltung der Erfindung weiterbildend ist die Zweileiter-Anschlußschaltung ferner dafür eingerichtet, für den Betrieb der Treiberschaltung erforderliche elektrische Leistung von der Meß- und Versorgungseinheit, beispielsweise via (4 mA bis 20 mA-) Stromschleife, zu beziehen, und/oder mittels der Meß- und Betriebsschaltung generierte Meßdaten an die Meß- und Versorgungseinheit, beispielsweise durch Modulation eines in der Zweileiter-Anschlußschaltung fließenden und/oder der Bereitstellung von elektrischer Leistung für die Treiberschaltung und/oder die Meß- und Betriebsschaltung dienenden Stromes, zu übermitteln.

Nach einer dritten Ausgestaltung der Umformer-Elektronik der Erfindung ist vorgesehen, daß die Meß- und Betriebsschaltung einen Spannungsregler, der an einem Reglerausgang eine, beispielsweise auf einen vorgegebenen Sollwert geregelte und/oder mehr als 1 V betragende, dritte Gleichspannung liefert, sowie einen, beispielsweise mittels der dritten Gleichspannung betriebenen und/oder als digitaler Signalprozessor ausgebildeten, Mikrocomputer aufweist. Nach einer ersten Ausgestaltung des Meßsystems der Erfindung ist vorgesehen, daß eine am Ausgang des Spannungsreglers der Betriebsschaltung momentan maximal verfügbare elektrische Leistung von einem momentanen Betrag der mittels des Meßwandlers erfaßten Meßgröße abhängig ist, beispielsweise derart, daß bei zunehmendem Betrag der Meßgröße die momentan maximal verfügbare elektrische Leistung ansteigt, und/oder daß bei abnehmendem Betrag der Meßgröße die momentan maximal verfügbare elektrische Leistung abnimmt.

Nach einer zweiten Ausgestaltung des Meßsystems der Erfindung ist vorgesehen, daß eine am Ausgang des Spannungsreglers der Betriebsschaltung momentan maximal verfügbare elektrische Leistung von einem momentanen Betrag der mittels des Meßwandlers erfaßten Meßgröße abhängig ist, beispielsweise derart, daß bei einem für das Meßsystem vorgegeben minimalen Betrag nämlicher Meßgröße die momentan maximal verfügbare elektrische Leistung kleiner ist als bei einem für das Meßsystem vorgegeben maximalen Betrag nämlicher Meßgröße.

Nach einer dritten Ausgestaltung des Meßsystems der Erfindung ist vorgesehen, daß eine momentane Pulslänge und/oder eine momentane Pausenlänge des Lastsignals und/oder ein momentanes Puls-zu-Pausen-Verhältnis von einem momentanen Betrag der mittels des Meßwandlers erfaßten Meßgröße abhängig ist, beispielsweise derart, daß bei einem für das Meßsystem vorgegeben minimalen Betrag der Meßgröße nämliche Pulslänge kleiner ist als bei einem im vergleichsweise größeren Betrag nämlicher Meßgröße bzw. daß bei einem für das Meßsystem vorgegeben minimalen Betrag der Meßgröße nämliche Pausenlänge größer ist als bei einem vergleichsweise größeren Betrag nämlicher Meßgröße und/oder daß bei einem für das Meßsystem vorgegeben minimalen Betrag nämlicher Meßgröße nämliches Puls-zu-Pausen-Verhältnis kleiner ist als bei einem vergleichsweise größeren Betrag nämlicher Meßgröße.

Nach einer vierten Ausgestaltung des Meßsystems der Erfindung ist vorgesehen, daß ein Betrag der vom Spannungsregler der Meß- und Betriebsschaltung momentan gelieferten Gleichspannung von einem momentanen Betrag der mittels des Meßwandlers erfaßten Meßgröße unabhängig ist; und/oder daß eine am Ausgang des Spannungsreglers der Meß- und Betriebsschaltung momentan maximal verfügbare elektrische Leistung von einem momentanen Betrag der mittels des Meßwandlers erfaßten Meßgröße unabhängig ist.

Nach einer fünften Ausgestaltung des Meßsystems der Erfindung ist vorgesehen, daß der Meßwandler wenigstens ein mittels des, beispielsweise als elektrodynamischer Schwingungserreger ausgebildeten und/oder mittels einer Tauchanker-Spulen-Anordnung gebildeten, Aktors zu mechanischen Schwingungen angeregtes Meßrohr aufweist.

Nach einer sechsten Ausgestaltung des Meßsystems der Erfindung ist vorgesehen, daß die Umformer-Elektronik an eine davon entfernte Meß- und Versorgungseinheit angeschlossen ist. Diese Ausgestaltung der Erfindung weiterbildend ist ferner vorgesehen, daß die Umformer-Elektronik für den Betrieb der Treiberschaltung erforderliche elektrische Leistung von der Meß- und Versorgungseinheit bezieht und/oder daß die Umformer-Elektronik mittels der Meß- und Betriebsschaltung generierte Meßdaten, beispielsweise jeweils eine Massendurchflußrate eines in einer Rohrleitung strömenden Mediums repräsentierende Massendurchfluß-Meßwerte, jeweils eine Dichte eines Mediums repräsentierende Dichte-Meßwerte, oder jeweils eine Viskosität eines Mediums repräsentierende Viskositäts-Meßwerte, an die Meß- und Versorgungseinheit, beispielsweise durch Modulation eines in einer in der Umformer-Elektronik vorgesehene Zweileiter-Anschlußschaltung fließenden Stromes, übermittelt.

Ein Grundgedanke der Erfindung besteht darin, das für einen Aktor eines aktiven Meßwandlers, mithin eines Meßwandlers vom Vibrationstyp, benötigte Treibersignal, das zumeist mit einem in einem weiten Strom- und Spannungsbereich veränderlich zu halten ist, durch Verwendung eines als Tiefsetzsteller bzw. "step-down"-Konverter ausgebildeten, elektrische Leistung über einen weiten Spannungs- und Strombereich mit einem sehr hohen Wirkungsgrad umsetzende Gleichspannungswandlers möglichst effizient bzw. verlustarm von einer geregelten, mithin in ihrer Spannungshöhe betriebsbedingt schwankenden Gleichspannung abzuleiten, und zwar möglichst ohne nennenswerte Rückwirkung auf die die Gleichspannung liefernde Versorgungsschaltungen und mit einer über den gesamten Arbeitsbereich des Meßsystems möglichst gleichbleibend hohen Signalqualität.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:
- Fig. 1: ein, hier als Kompakt-Meßgerät ausgebildetes, Meßsystem für in Rohrleitungen strömende Medien;
- Fig. 2: schematisch nach Art eines Blockschaltbildes eine, insb. auch für ein Meßsystem gemäß den Fig. 1 geeignete, Umformer-Elektronik mit daran angeschlossenem aktivem Meßwandler; und
- Fig. 3: schematisch nach Art eines Blockschaltbildes eine, insb. auch für eine Umformer-Elektronik gemäß den Fig. 2, mithin ein Meßsystem gemäß den Fig. 1 geeignete Treiberschaltung für einen aktiven Meßwandler, mithin einen Meßwandler vom Vibrationstyp mit wenigstens einem schwingenden Meßrohr.

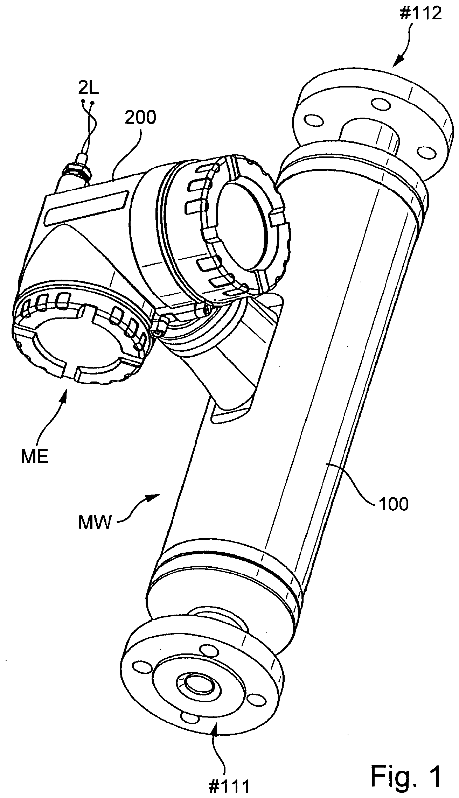

In der Fig. 1 ist ein in eine Prozeßleitung, etwa eine Rohrleitung einer industriellen Anlage, einfügbares, beispielsweise mittels eines Coriolis-Massendurchflußmeßgerät, Dichtemeßgerät, Viskositätsmeßgerät oder dergleichen gebildetes, Meßsystem für fließfähige, insb. fluide, Medien, dargestellt, das im hier gezeigten Ausführungsbeispiel dem Messen und/oder Überwachen wenigstens einer weiteren physikalischen Meßgröße eines in der Rohrleitung geführten Mediums dient, wie etwa einer Massendurchflußrate, einer Dichte, einer Viskosität oder dergleichen. Das - hier mittels eines In-Line-Meßgeräts in Kompaktbauweise realisierte - Meßsystem umfaßt dafür einen über ein Einlaßende #111 sowie ein Auslaßende #112 an die Prozeßleitung angeschlossenen physikalisch-elektrischen Meßwandler MW, der an eine, insb. im Betrieb von extern via Anschlußkabel und/oder mittels interner Energiespeicher mit elektrischer Energie versorgte, Umformer-Elektronik ME des Meßsystems angeschlossen ist. Das elektrische Anschließen des Meßwandlers an die erwähnte Umformer-Elektronik kann mittels entsprechender Anschlußleitungen erfolgen, die aus dem Elektronik-Gehäuse 200, beispielsweise via Kabeldurchführung. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein.

Bei dem Meßwandler MW handelt es sich um einen ein - hier von der Umformer-Elektronik ME geliefertes - elektrisches, beispielsweise bipolares und/oder zumindest zeitweise periodisches, Treibersignal i_{exc}, mithin dessen elektrische Signalleistung P_{exc}, mittels eines Aktors 5, beispielsweise einem elektro-mechanischen, elektro-akustischen oder elektro-magnetischen Erreger, in einen dem Erfassen der Meßgröße dienlichen Meßeffekt, wie etwa Corioliskräfte oder induzierte Spannungen im Medium, entsprechend umsetzenden aktiven Meßwandler. Der Meßwandler MW kann demnach beispielsweise ein im Betrieb entsprechend vom zu messenden Medium, wie etwa einer Flüssigkeit und/oder einem Gas, durchströmter Durchfluß-Meßwandler, nicht zuletzt auch ein Meßwandler vom Vibrationstyp mit wenigstens einem vibrierenden Meßrohr und einem darauf einwirkenden elektro-mechanischen Schwingungserreger, ein magnetisch-induktiver Meßwandler für leitfähige Flüssigkeiten, oder ein wenigstens einen akustischen Sender aufweisenden Ultraschall-Meßwandler für Fluide, oder beispielsweise auch ein nach dem Echoprinzip arbeitender HF-Sende-/Empfangswandler für elektromagnetische Mikrowellen sein. Für den erwähnten Fall, daß es sich bei dem Meßwandler MW um einen solchen vom Vibrationstyp für strömende Medien handelt ist nach einer Ausgestaltung der Erfindung ferner vorgesehen, daß der Meßwandler wenigstens ein mittels des, beispielsweise als elektrodynamischer Schwingungserreger ausgebildeten und/oder mittels einer Tauchanker-Spulen-Anordnung gebildeten, mithin also induktiven, Aktors zu mechanischen Schwingungen angeregtes Meßrohr aufweist, mithin zu solchen Schwingungen, die infolge von Corioliskräften im durch den Meßwandler strömenden Medium eine von einer momentanen Massendurchflußrate abhängige Schwingungsform und/oder eine von einer momentanen Dichte des im Meßwandler geführten Mediums abhängige Resonanzfrequenz und/oder eine von einer
momentanen Viskosität des im Meßwandler geführten Mediums abhängige Dämpfung aufweisen.

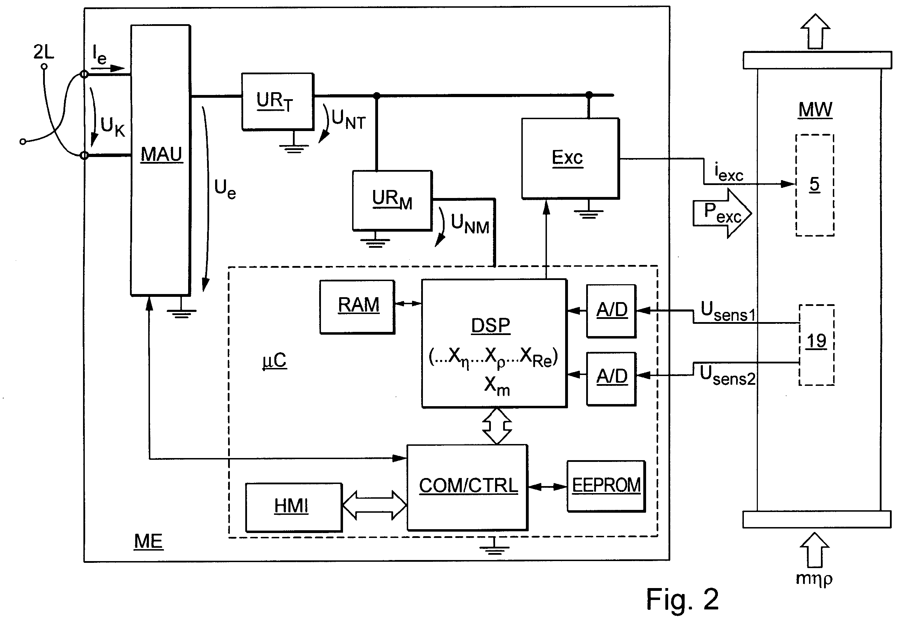

Die, beispielsweise auch eigensichere und/oder nominell mit einer maximalen Leistung von 1 W oder weniger betriebene, Umformer-Elektronik ME weist, wie in Fig. 2 schematisch nach Art eines Blockschaltbildes dargestellt, eine dem Ansteuern des Meßwandlers dienende, nicht zuletzt auch das erwähnte Treibersignal generierende Treiber-Schaltung Exc sowie eine vom Meßwandler MW bzw. einer darin vorgesehenen, etwa mittels elektrodynamischen Schwingungssensoren gebildete, Sensoranordnung 19 gelieferte Meßsignale uₛₑₙₛ₁, uₛₑₙₛ₂ verarbeitende, beispielsweise mittels eines digitalen Signalprozessors DSP gebildete und/oder im Betrieb mit der Treiber-Schaltung Exc kommunizierende, Meß- und Betriebsschaltung µC auf, die im Betrieb die wenigstens eine Meßgröße, wie z.B. den momentanen oder einen totalisierten Massendurchfluß, repräsentierende Meßwerte liefert. Die vom Meßwandler generierten - beispielsweise jeweils als Schwingungsmeßsignal ausgebildeten - Meßsignale, die im Falles eines Meßwandlers vom Vibrationstyp jeweils eine Signalkomponente mit einer momentanen Schwingfrequenz, f_{exc}, des wenigstens einen schwingenden Meßrohrs entsprechende Signalfrequenz aufweisen, sind daher, wie auch in Fig. 2 gezeigt, der Umformer-Elektronik ME und daselbst dann der darin vorgesehenen Meß- und Auswerteschaltung µC zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Nach einer weiteren Ausgestaltung der Erfindung ist die Meß- und Betriebsschaltung µC mittels eines in der Umformer-Elektronik ME vorgesehenen, beispielsweise mittels eines digitalen Signalprozessors DSP realisierten, Mikrocomputers und mittels in diesen entsprechend implementierter und darin ablaufender Programm-Codes realisiert. Die Programm-Codes können z.B. in einem nicht-flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Es versteht sich dabei praktisch von selbst, daß die Meßsignale, wie bereits angedeutet, für eine Verarbeitung im Mikrocomputer mittels entsprechender Analog-zu-digitalWandler A/D der Umformer-Elektronik ME in entsprechende Digitalsignale umzuwandeln sind, vgl. hierzu beispielsweise die eingangs erwähnten US-B 63 11 136.

Die Treiber-Schaltung Exc und die Meß- und Betriebsschaltung µC sowie weitere, dem Betrieb des Meßsystems dienende Elektronik-Komponenten der Umformer-Elektronik, wie etwa interne Energieversorgungsschaltungen zum Bereitstellen interner Versorgungsgleichspannungen, eine dem Anschluß an ein übergeordnetes Meßdatenverarbeitungssystem bzw. einen externen Feldbus dienenden Anschlußschaltung MAU und/oder eine der Betriebsteuerung des Meßsystems dienende interne Steuerungselektronik COM/CNTRL der Meß- und Betriebsschaltung µC, sind ferner in einem entsprechenden, insb. schlag- und/oder auch explosionsfest und/oder hermetisch dicht ausgebildeten, Elektronikgehäuse 200 untergebracht. Zum Visualisieren von Meßsystem intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen.

In vorteilhafter Weise kann die, insb. programmierbare und/oder fernparametrierbare, Umformer-Elektronik ME ferner so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des Meßsystems dienende Einstell- und/oder Diagnosewerte. Dabei kann die Umformer-Elektronik ME beispielsweise eine solche Anschlußschaltung aufweisen, die im Betrieb von einer im Datenverarbeitungssystem vorgesehen, vom Meßsystem entfernten Meß- und Versorgungseinheit gespeist wird. Im besonderen kann die Umformer-Elektronik hierbei ferner so ausgebildet sein, daß sie mittels einer, beispielsweise als 4-20 mA-Stromschleife konfigurierten, Zweileiter-Verbindung 2L mit dem externer elektronischen Datenverarbeitungssystem, mithin vorgenannter Meß- und Versorgungseinheit, elektrisch verbindbar ist und darüber mit elektrischer Energie versorgt werden sowie Meßwerte zum Datenverarbeitungssystem übertragen kann.

Gemäß einer Ausgestaltung der Erfindung umfaßt die Umformer-Elektronik daher ferner eine Zweileiter-Anschlußschaltung MAU zum Anschließen der Umformer-Elektronik an eine davon entfernte Meß- und Versorgungseinheit. Ferner ist hierbei vorgesehen, daß die Umformer-Elektronik für deren Betrieb, mithin den Betrieb der Treiberschaltung, erforderliche elektrische Leistung von der Meß- und Versorgungseinheit, etwa inform eines von der Meß- und Versorgungseinheit via (4 mA bis 20 mA-) Stromschleife eingespeisten Versorgungsgleichstrom Iₑ und einer damit korrespondierenden Klemmenspannung U_{K} an einem Eingang der Zweileiter-Anschlußschaltung MAU, bezieht. Darüberhinaus ist die die Umformer-Elektronik, mithin die Zweileiter-Anschlußschaltung MAU, dafür eingerichtet, mittels der Meß- und Betriebsschaltung generierte Meßdaten, etwa jeweils eine Massendurchflußrate eines in einer Rohrleitung strömenden Mediums repräsentierende Massendurchfluß-Meßwerte, jeweils eine Dichte eines Mediums repräsentierende Dichte-Meßwerte, oder jeweils eine Viskosität eines Mediums repräsentierende Viskositäts-Meßwerte, an die Meß- und Versorgungseinheit, beispielsweise durch Modulation eines in einer in der Umformer-Elektronik vorgesehene Zweileiter-Anschlußschaltung MAU fließenden, nicht zuletzt auch der Versorgung der Umformer-Elektronik, mithin der der Bereitstellung von elektrischer Leistung für die Treiberschaltung und/oder die Meß- und Betriebsschaltung, dienenden, elektrischen Stromes, zu übermitteln. Zur Bildung der Zweileiter-Anschlußschaltung MAU können, nicht zuletzt auch für den erwähnten Fall, daß nämliche Zweileiter-Anschlußschaltung MAU Teil einer (4 mA bis 20 mA-) Stromschleife ist, beispielsweise konventionelle Längsstromregler und/oder Querstromregler dienen, nicht zuletzt auch zwecks der Bereitstellung einer zumindest innerhalb eines stationären Arbeitspunktes des Meßsystems weitgehend stabilen internen Eingangsspannung Uₑ.

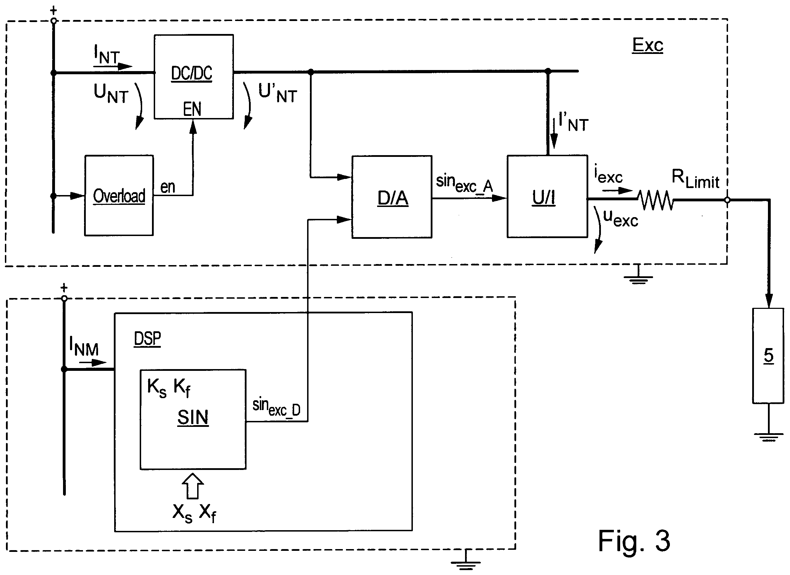

Wie bereits erwähnt, ist die Effizienz bzw. der Wirkungsgrad, mit dem Meßsystemen der in Rede stehenden Art, mithin Zweileiter-Feldgeräte, die verfügbare elektrische Leistung in Meßwerte wandelt nicht zuletzt auch davon abhängig, daß die Treiberschaltung einerseits energieefizient arbeitet, anderseits aber auch möglichst keine, den Betrieb der Meßsschaltung störenden Spannungsschwankungen in der Meßsystem internen Energieversorgung provoziert. Die erfindungsgemäße Treiberschaltung weist dafür den in Fig. 3 schematisch gezeigten folgenden prinzipiellem Aufbau bzw., daraus abgleitet, folgende Wirkunsweise auf: Ein Spannungsregler UR_{T}, liefert an einem Reglerausgang eine, beispielsweise auf einen vorgebbaren Sollwert geregelte und/oder stets mehr als 1.5 V (= Volt) und weniger als 10 V betragende, erste Gleichspannung U_{NT}. Die vom Spannungsregler gelieferte, beispielsweise gelegentlich weniger als ein, aktor- bzw. meßwandlerspezifischer - vorgegebener Spannungsschwellenwert betragende und/oder innerhalb eines vorgegebenen Spannungsintervalls veränderliche, Gleichspannung U_{NT} ist im weiteren Verlauf einem Gleichspannungswandler DC/DC primärseitig angelegt, der diese in eine sekundärseitig abgreifbare - nicht zuletzt auch wegen Schwankungen der in der Umformer-Elektronik insgesamt verfügbaren elektrischen Leistung variable - zweite Gleichspannung U'_{NT} konvertiert. Der Gleichspannungswandler DC/DC ist bei der erfindungsgemäßen Treiberschaltung dabei so eingereichtet, daß die zweite Gleichspannung U'_{NT} einen Betrag aufweist, der stets kleiner als ein Betrag der ersten Gleichspannung U_{NT} ist, d.h. der Gleichspannungswandler DC/DC ist als ein sogenannter Tiefsetzsteller oder auch "Step-down"-Konverter ausgebildet. Zu dessen Realisierung kann beispielsweise ein TPS62xxx von der Fa. Texas Instruments, mithin ein TPS62240 oder ein TPS6205x, verwendet werden.

Ferner weist die Treiberschaltung eine mittels der sekundärseitig des Gleichspannungswandler DC/DC anstehenden Gleichspannung U'_{NT} betriebene Endstufe auf, die ihrerseits dazu dient, ein an einem, insb. hochohmigen und/oder einen Eingangswiderstand von mehr als 0.5 MΩ aufweisenden, Signaleingang anliegendes, beispielsweise bipolares und/oder zumindest zeitweise periodisches, Steuersignal sin_{exc_A} in das Treibersignal i_{exc} für den Meßwandler zu wandeln, mithin so zu verstärken, daß das mit Steuersignal sin_{exc_A} korrespondierende, ggf. lediglich einer Amplitudenmodulation dessen entsprechende, Treibersignal i_{exc} eine im Ergebnis elektrische Leistung P_{exc} aufweist, die höher als eine elektrische Leistung Pₛᵢₙ des Steuersignals sin_{exc_A} ist.

Wie bereits erwähnt, stellt der Spannungsregler UR_{T} an seinem Ausgang eine über einen gewissen Betriebszeitraum gesehen schwankende elektrische Leistung bereit, mithin auch derart, daß ein Bedarf des Gleichspannungswandlers DC/DC an elektrischer Leistung gelegentlich höher ist, als eine am Ausgang des Spannungsreglers momentan verfügbare elektrische Leistung bzw. liefert der Spannungsregler UR_{T} die Gleichspannung mit einem gelegentlich unterhalb eines als vorgegebenen Spannungsschwellenwert liegenden Betrag. Im Ergebnis stellt sich also am Spannungsregler gelegentlich eine Überlastsituation ein - etwa infolge einer momentan im Meßsystem sehr geringen verfügbaren Leistung - in der die Treiberschaltung, bezogen auf die mittels des Treibersignals i_{exc} dem Aktor des Meßwandlers momentan eigentlich bereitzustellenden elektrische Leistung, unterversorgt ist. Solche Überlastsituationen können in Meßsystemen der in Rede stehenden Art beispielsweise auftreten, wenn einerseits die zu erfassenden Meßgröße, beispielsweise also der Massendurchflußrate oder der Dichte, einen niedrigen Betrag aufweist und anderseits das Treibersignal gleichzeitig mit einer eher höheren elektrischen Leistung benötigt ist - im Falle eines Meßwandlers vom Vibrationstyp etwa infolge einer vergleichsweise hohen Dämpfung der Schwingungen des wenigstens einen Meßrohrs.

Zum Erfassen einer solchen Überlastsituation des Spannungsreglers, nicht zuletzt auch zwecks Signalisieren nämlicher Überlastsituation und/oder zum lastabhängigen Ansteuern des Gleichspannungswandlers DC/DC, umfaßt die Treiberschaltung der Erfindung ferner einen, beispielsweise mittels eines Komparators für die am Ausgang des Spannungsreglers gelieferten erste Gleichspannung U_{NT} mit einem dafür vorgegebenen Spannungsschwellenwert gebildeten, Überlastdetektor. Der Überlastdetektor ist im besonderen dafür eingerichtet, beispielsweise also durch Vergleichen der vom Spannungsregler am Ausgang gelieferten erste Gleichspannung U_{NT} mit dem dafür vorgegebenen Spannungsschwellenwert oder auch durch Vergleichen der am Ausgang des Spannungsreglers abgegebenen elektrischen Leistung mit einem dafür vorgegebenen Leistungsschwellenwert, ein, beispielsweise binären, Lastsignals en zu erzeugen, das mit einem ersten Signalpegel (L) signalisiert, daß der Spannungsregler überlastet ist bzw. daß ein Bedarf des Gleichspannungswandlers DC/DC an elektrischer Leistung momentan höher ist, als eine am Ausgang des Spannungsreglers momentan verfügbare elektrische Leistung, oder das mit einem vom ersten Signalpegel verschiedenen zweiten Signalpegel (H) signalisiert, daß der Spannungsregler nicht überlastet ist bzw. daß die am Ausgang des Spannungsreglers momentan verfügbare elektrische Leistung zur Deckung des Bedarfs des Gleichspannungswandlers DC/DC an elektrischer Leistung ausreichend ist. Im Ergebnis dessen ist das Lastsignal zumindest zeitweise - hier für die Dauer einer solchen gelegentlich auftretenden Überlastsituation - als ein aperiodisches Taktsignal mit veränderlicher Pulslänge und/oder mit veränderlicher Pausenlänge und/oder mit veränderlichen Puls-zu-Pausen-Verhältnis ausgebildet. Dabei ist eine momentane Pulslänge, mithin auch eine Pausenlänge bzw. eine Puls-Pausen-Verhältnis, des Lastsignals von der am Ausgang des Spannungsreglers momentan verfügbare elektrische Leistung abhängig, nämlich derart, daß bei einer für die Treiberschaltung vorgegebenen minimalen elektrischen Leistung nämliche Pulslänge kleiner ist als bei einer vergleichsweise größeren elektrischen Leistung bzw. daß bei zunehmender elektrische Leistung nämliche Pulslänge größer wird bzw. derart, daß bei einer für die Treiberschaltung vorgegebenen minimalen elektrischen Leistung nämliche Pausenlänge größer ist als bei einer vergleichsweise größeren elektrischen Leistung bzw. daß bei zunehmender elektrische Leistung nämliche Pausenlänge kleiner wird. Damit einhergehend ist bei einer für die Treiberschaltung vorgegebenen minimalen elektrischen Leistung auch nämliches Puls-zu-Pausenlänge-Verhältnis kleiner als bei einer vergleichsweise größeren elektrischen Leistung bzw. wird bei zunehmender elektrischer Leistung nämliches Puls-zu-Pausenlänge-Verhältnis größer.

Desweiteren weist der Gleichspannungswandler DC/DC einen Steuereingang EN zum An- bzw. Ausschalten des Gleichspannungswandlers DC/DC auf. Nämlichem Steuereingang EN ist, wie in der Fig. 3 schematisch dargestellt, das vom Überlastdetektor erzeugte Lastsignal en zugeführt. Der Gleichspannungswandler DC/DC ist ferner, abgestimmt, auf das Lastsignal en, so eingerichtet, daß der Gleichspannungswandler DC/DC dann, wenn das Lastsignal den ersten Signalpegel (L) angenommen hat, ausgeschaltet ist, und daß der Gleichspannungswandler DC/DC dann, wenn das Lastsignal den zweiten Signalpegel (H) angenommen hat, eingeschaltet ist. Ferner ist der Gleichspannungswandler DC/DC gemäß einer weiteren Ausgestaltung der Erfindung so eingerichtet, daß er im ausgeschalteten Zustand die zweite Gleichspannung U'_{NT} mit einem Betrag von jedenfalls weniger als 1 V liefert bzw. einen von der erste Gleichspannung U_{NT} getriebenen effektiven Eingangsstrom I_{N1} - hier also ein Ruhestrom des Gleichspannungswandler DC/DC - von weniger als 100 µA fließen läßt, und daß er im eingeschalteten Zustand die zweite Gleichspannung U'_{NT} mit einem Betrag von mehr als 1 V liefert bzw. einen von der erste Gleichspannung U_{NT} getriebenen effektiven Eingangsstrom I_{NT} von mehr als 0.5 mA fließen läßt. Nach einer weiteren Ausgestaltung der Erfindung ist der Gleichspannungswandler DC/DC, nicht zuletzt auch zwecks der Erzielung eines möglichst hohen Wirkungsgrads der Treiberschaltung insgesamt, als ein, beispielsweise lediglich in einem Pulsfrequenzmodulation-Modus betriebener, Schaltregler und/oder als ein, beispielsweise zwecks Reduzierung des vorgenannten Ruhestroms mit einem in seiner Periodendauer modulierten Rechtecksignal (PFM) getakteter, Abwärtswandler ausgebildet ist. Für den erwähnten fall, daß der Gleichspannungswandler DC/DC mittels eines TPS62xxx gebildet ist, kann letzterer demnach beispielsweise im sogenannten "Power Save Mode" betrieben werden.

Nach einer weiteren Ausgestaltung der Erfindung ist ferner vorgesehen, das Steuersignal sin_{exc_A} von einem zuvor, etwa mittels der Meß- und Betriebsschaltung µC, gebildeten Digitalsignal sin_{exc_D} abzuleiten. Dafür umfaßt die Treiberschaltung gemäß einer weiteren Ausgestaltung der Erfindung einen entsprechenden Digital-zu-Analog-Wandler D/A zum Erzeugen des Steuersignals sin_{exc_A}. Zur Vermeidung eines allfälligen Übersteuerns der Endstufe ist ferner vorgesehen, die zweite Gleichspannung U'_{N1} als Betriebsspannung Digital-zu-Analog-Wandlers D/A zu verwenden, zumindest aber mittels nämlicher Gleichspannung U'_{NT} eine dazu proportionale Referenzspannung des Digital-zu-Analog-Wandlers D/A zubilden, wodurch auf sehr einfache Weise sichergestellt werden kann, daß das Steuersignal sin_{exc_A} auch im Falle einer Überlastsituation eine auf die momentane Betriebsspannung der Endstufe, mithin also auch deren momentanen Aussteuerbereich, passend abgestimmte Signalamplitude aufweist. Zwecks des Erzeugens des Digitalsignals sin_{exc_D} kann in der Meß- und Betriebsschaltung ein entsprechenden, beispielsweise auch mittels des erwähnten digitalen Signalprozessors realisierten, Signalgenerator eingerichtet sein, beispielsweise derart, daß nämlicher Signalgenerator das Digitalsignal sin_{exc_D} mit einer von einem digitalen Einstellwert an einem entsprechenden Amplitudensetzeingangs abhängigen Amplitudenwert an einem mit einem Digitaleingang des Digital-zu-Analog-Wandlers D/A entsprechend verbundenen Signalausgang ausgibt.

Wie in der Fig. 2 schematisch dargestellt, weist die Meß- und Betriebsschaltung einen Spannungsregler UR_{M} auf der an einem Reglerausgang eine, beispielsweise auf einen vorgegebenen Sollwert geregelte und/oder mehr als 1 V betragende, dritte Gleichspannung U_{NM} liefert. Der Spannungsregler UR_{M} der Meß- und Betriebsschaltung und der Spannungsregler UR_{T} der Treiberschaltung können dabei in vorteilhafter Weise ferner so aufeinander abgestimmt sein, daß eine am Ausgang des Spannungsreglers UR_{T} der Treiberschaltung momentan maximal verfügbare elektrische Leistung von einem momentanen Betrag der mittels des Meßwandlers MW erfaßten Meßgröße abhängig ist, etwa derart, daß bei zunehmendem Betrag der Meßgröße nämliche elektrische Leistung ansteigt, und/oder daß bei abnehmendem Betrag der Meßgröße nämliche Leistung abnimmt, während eine am Ausgang des Spannungsreglers UR_{M} der Meß- und Betriebsschaltung momentan maximal verfügbare elektrische Leistung, mithin auch ein Betrag der vom Spannungsregler UR_{M} der Meß- und Betriebsschaltung momentan gelieferten Gleichspannung U_{NM}, von einem momentanen Betrag der mittels des Meßwandlers erfaßten Meßgröße unabhängig ist. Die vom Spannungsregler der Meß- und Betriebsschaltung momentan gelieferten Gleichspannung U_{N2} kann, wie in der Fig. 2 angedeutet, beispielsweise, nicht zuletzt auch wegen ihrer vergleichsweise hohen Stabilität, als Betriebsspannung für die erwähnte interne Steuerungselektronik COM/CNTRL und/oder den digitalen Signalprozessor DSP dienen.

## Patentansprüche

1. Treiberschaltung für einen Aktor, insb. für einen elektro-mechanischen, elektro-akustischen oder elektro-magnetischen Erreger eines physikalisch-elektrischen Meßwandlers, welche Treiberschaltung umfaßt:
- einen Spannungsregler (UR_{T}), der dazu eingerichtet ist, an einem Reglerausgang eine, insb. auf einen vorgegebbaren Sollwert geregelte und/oder stets mehr als 1.5 V und weniger als 20 V betragende, erste Gleichspannung (U_{NT}) zu liefern;
- einen Gleichspannungswandler (DC/DC), dem primärseitig die vom Spannungsregler gelieferte, insb. gelegentlich weniger als ein vorgegebener Spannungsschwellenwert betragende und/oder innerhalb eines vorgegebenen Spannungsintervalls veränderliche, erste Gleichspannung (U_{NT}) angelegt ist und der dazu eingerichtet ist, diese in eine sekundärseitig abgreifbare, insb. variable und/oder stets weniger als 3 V betragende, zweite Gleichspannung (U'_{NT}) zu konvertieren;
- eine mittels der zweiten Gleichspannung (U'_{NT}) betriebene Endstufe, die dazu eingerichtet ist, ein an einem, insb. hochohmigen und/oder einen Eingangswiderstand von mehr als 10 kΩ aufweisenden, Signaleingang anliegendes, insb. bipolares und/oder zumindest zeitweise periodisches, Steuersignal (sin_{exc_A}) in ein, insb. bipolares und/oder zumindest zeitweise periodisches, Treibersignal (i_{exc}) für den Meßwandler zu wandeln; sowie
- einen Überlastdetektor zum Erfassen einer Überlastsituation des Spannungsreglers, insb. durch Vergleichen der vom Spannungsregler am Ausgang gelieferten erste Gleichspannung (U_{NT}) mit einem dafür vorgegebenen Spannungsschwellenwert und/oder durch Vergleichen der am Ausgang des Spannungsreglers abgegebenen elektrischen Leistung mit einem dafür vorgegebenen Leistungsschwellenwert, und zum Erzeugen eines, insb. auch den Gleichspannungswandler (DC/DC) ansteuernden und/oder binären, Lastsignals (en);
- wobei die zweite Gleichspannung (U'_{NT}) einen Betrag aufweist, der stets kleiner als ein Betrag der ersten Gleichspannung (U_{NT}) ist,
- wobei das Treibersignal (i_{exc}) eine elektrische Leistung (P_{exc}) aufweist, die höher als eine elektrische Leistung (Pₛᵢₙ) des Steuersignals (sin_{exc_A}) ist;
- wobei das Lastsignal (en) dazu eingerichtet ist,
-- mit einem ersten Signalpegel zu signalisieren, daß der Spannungsregler überlastet ist und/oder daß ein Bedarf des Gleichspannungswandlers (DC/DC) an elektrischer Leistung momentan höher ist, als eine am Ausgang des Spannungsreglers momentan verfügbare elektrische Leistung, oder
-- mit einem vom ersten Signalpegel verschiedenen zweiten Signalpegel zu signalisieren, daß der Spannungsregler nicht überlastet ist und/oder daß die am Ausgang des Spannungsreglers momentan verfügbare elektrische Leistung zur Deckung des Bedarfs des Gleichspannungswandlers (DC/DC) an elektrischer Leistung ausreichend ist;
- wobei der Gleichspannungswandler (DC/DC) einen Steuereingang (EN) zum An- bzw. Ausschalten des Gleichspannungswandlers (DC/DC) aufweist, welchem Steuereingang (EN) das vom Überlastdetektor erzeugte Lastsignal (en) zugeführt ist; *und*
- wobei der Gleichspannungswandler (DC/DC) so eingerichtet ist,
- daß der Gleichspannungswandler (DC/DC) dann, wenn das Lastsignal den ersten Signalpegel angenommen hat, ausgeschaltet ist, insb. derart, daß der Gleichspannungswandler (DC/DC) die zweite Gleichspannung (U'_{NT}) mit einem Betrag von weniger als 1 V liefert und/oder einen von der erste Gleichspannung (U_{NT}) getriebenen effektiven Eingangsstrom (I_{N1}) von weniger als 100 µA fließen läßt, und
- daß der Gleichspannungswandler (DC/DC) dann, wenn das Lastsignal den zweiten Signalpegel angenommen hat, eingeschaltet ist, insb. derart, daß der Gleichspannungswandler (DC/DC) die zweite Gleichspannung (U'_{NT}) mit einem Betrag von mehr als 1 V liefert und/oder einen von der erste Gleichspannung (U_{NT}) getriebenen effektiven Eingangsstrom (I_{NT}) von mehr als 0.5 mA fließen läßt.

2. Treiberschaltung nach dem vorherigen Anspruch,
- wobei der Spannungsregler dazu eingerichtet ist, seinem Ausgang eine schwankende elektrische Leistung bereitzustellen, insb. derart, daß ein Bedarf des Gleichspannungswandlers (DC/DC) an elektrischer Leistung gelegentlich höher ist, als eine am Ausgang des Spannungsreglers momentan verfügbare elektrische Leistung; und/oder
- wobei der Spannungsregler dazu eingerichtet ist, erste Gleichspannung (U_{NT}) mit einem gelegentlich unterhalb eines als vorgegebenen Spannungsschwellenwert liegenden Betrag zu liefern; und/oder
- wobei der Gleichspannungswandler (DC/DC) als ein, insb. lediglich in einem Pulsfrequenzmodulation-Modus betriebener, Schaltregler ausgebildet ist; und/oder
- wobei der Gleichspannungswandler (DC/DC) als ein, insb. mit einem in seiner Periodendauer modulierten Rechtecksignal (PFM) getakteter, Abwärtswandler ausgebildet ist.

3. Treiberschaltung nach einem der vorherigen Ansprüche , wobei das Lastsignal zumindest zeitweise als ein aperiodisches Taktsignal mit veränderlicher Pulslänge und/oder mit veränderlicher Pausenlänge und/oder mit veränderlichen Puls-zu-Pausen-Verhältnis ausgebildet ist.

4. Treiberschaltung nach dem vorherigen Anspruch,
- wobei eine momentane Pulslänge des Lastsignals von der am Ausgang des Spannungsreglers momentan verfügbare elektrische Leistung abhängig ist, insb. derart, daß bei einer für die Treiberschaltung vorgegebenen minimalen elektrischen Leistung nämliche Pulslänge kleiner ist als bei einer vergleichsweise größeren elektrischen Leistung bzw. daß bei zunehmender elektrische Leistung nämliche Pulslänge größer wird; und/oder
- wobei eine momentane Pausenlänge des Lastsignals von der am Ausgang des Spannungsreglers momentan verfügbare elektrische Leistung abhängig ist, insb. derart, daß bei einer für die Treiberschaltung vorgegebenen minimalen elektrischen Leistung nämliche Pausenlänge größer ist als bei einer vergleichsweise größeren elektrischen Leistung bzw. daß bei zunehmender elektrische Leistung nämliche Pausenlänge kleiner wird; und/oder
- wobei ein momentanes Puls-zu-Pausenlänge-Verhältnis des Lastsignals von der am Ausgang des Spannungsreglers momentan verfügbare elektrische Leistung abhängig ist, insb. derart, daß bei einer für die Treiberschaltung vorgegebenen minimalen elektrischen Leistung nämliches Puls-zu-Pausenlänge-Verhältnis kleiner ist als bei einer vergleichsweise größeren elektrischen Leistung bzw. daß bei zunehmender elektrische Leistung nämliches Puls-zu-Pausenlänge-Verhältnis größer wird.

5. Treiberschaltung nach einem der vorherigen Ansprüche, weiters umfassend einen, insb. mittels der zweiten Gleichspannung (U'_{N1}) betriebenen, Digital-zu-Analog-Wandler (D/A) zum Erzeugen des Steuersignals (sin_{exc_A}).

6. Treiberschaltung nach dem vorherigen Anspruch, wobei mittels der zweiten Gleichspannung (U'_{NT}) eine dazu proportionale Referenzspannung des Digital-zu-Analog-Wandlers (D/A) gebildet ist.

7. Umformer-Elektronik mit einer Treiberschaltung gemäß einem der vorherigen Ansprüche und mit einer Meß- und Betriebsschaltung für wenigstens ein von einem einen Aktor, insb. für einen elektro-mechanischen, elektro-akustischen oder elektro-magnetischen Erreger, aufweisenden physikalisch-elektrischen Meßwandler, insb. einem Meßwandler vom Vibrationstyp oder einem HF-Sende-/Empfangswandler, geliefertes Meßsignal.

8. Umformer-Elektronik nach dem vorherigen Anspruch,
- wobei die Meß- und Betriebsschaltung einen Signalgenerator umfaßt, der ein dem Erzeugen des Steuersignals (sin_{exc_A}) dienendes Digitalsignal (sin_{exc_D}) erzeugt; und/oder
- wobei die Meß- und Betriebsschaltung einen Spannungsregler (UR_{M}), der an einem Reglerausgang eine, insb. auf einen vorgegebenen Sollwert geregelte und/oder mehr als 1 V betragende, dritte Gleichspannung (U_{NM}) liefert, sowie einen, insb. mittels der dritten Gleichspannung (U_{NM}) betriebenen und/oder als digitaler Signalprozessor ausgebildeten, Mikrocomputer (DSP) aufweist.

9. Umformer-Elektronik nach einem der Ansprüche 7 bis 8, weiters umfassend eine Zweileiter-Anschlußschaltung (MAU) zum Anschließen der Umformer-Elektronik an eine davon entfernte Meß- und Versorgungseinheit.

10. Umformer-Elektronik nach dem vorherigen Anspruch,
- wobei die Zweileiter-Anschlußschaltung (MAU) dafür eingerichtet ist, für den Betrieb der Treiberschaltung erforderliche elektrische Leistung von der Meß- und Versorgungseinheit, insb. via (4 mA bis 20 mA-) Stromschleife, zu beziehen; und/oder
- wobei die Zweileiter-Anschlußschaltung (MAU) dafür eingerichtet ist, mittels der Meß- und Betriebsschaltung generierte Meßdaten an die Meß- und Versorgungseinheit, insb. durch Modulation eines in der Zweileiter-Anschlußschaltung (MAU) fließenden und/oder der Bereitstellung von elektrischer Leistung für die Treiberschaltung und/oder die Meß- und Betriebsschaltung dienenden Stromes, zu übermitteln.

11. Meßsystem mit einer, insb. eigensicheren, Umformer-Elektronik nach einem der Ansprüche 7 bis 10 und mit einem sowohl mit deren Treiberschaltung als auch deren Meß- und Betriebsschaltung elektrisch verbundenen physikalisch-elektrischen Meßwandler, insb. einem Meßwandler vom Vibrationstyp mit wenigstens einem vibrierenden Meßrohr, zum Erzeugen wenigstens eines von einer, insb. veränderlichen und/oder schwankenden, physikalischen Meßgröße, insb. einer Massendurchflußrate und/oder einer Dichte und/oder einer Viskosität eines in einer Rohrleitung geführten Fluids oder eines Füllstands eines in einem Behälter vorgehaltenen schüttfähigen Mediums, abhängigen bzw. damit korrespondierenden Meßsignals.

12. Meßsystem nach dem vorherigen Anspruch,
- wobei ein Betrag der vom Spannungsregler der Meß- und Betriebsschaltung momentan gelieferten Gleichspannung (U_{N2}) von einem momentanen Betrag der mittels des Meßwandlers erfaßten Meßgröße unabhängig ist; und/oder
- wobei eine am Ausgang des Spannungsreglers der Meß- und Betriebsschaltung momentan maximal verfügbare elektrische Leistung von einem momentanen Betrag der mittels des Meßwandlers erfaßten Meßgröße unabhängig ist; und/oder
- wobei der Meßwandler wenigstens ein mittels des, insb. als elektrodynamischer Schwingungserreger ausgebildeten und/oder mittels einer Tauchanker-Spulen-Anordnung gebildeten, Aktors zu mechanischen Schwingungen angeregtes Meßrohr aufweist; und/oder
- wobei eine am Ausgang des Spannungsreglers der Betriebsschaltung momentan maximal verfügbare elektrische Leistung von einem momentanen Betrag der mittels des Meßwandlers erfaßten Meßgröße abhängig ist, insb. derart, daß bei zunehmendem Betrag der Meßgröße die momentan maximal verfügbare elektrische Leistung ansteigt, und/oder daß bei abnehmendem Betrag der Meßgröße die momentan maximal verfügbare elektrische Leistung abnimmt, und/oder derart, daß bei einem für das Meßsystem vorgegeben minimalen Betrag nämlicher Meßgröße die momentan maximal verfügbare elektrische Leistung kleiner ist als bei einem für das Meßsystem vorgegeben maximalen Betrag nämlicher Meßgröße.

13. Meßsystem nach einem der Ansprüche 11 bis 12, jeweils in Verbindung mit Anspruch 3,
- wobei eine momentane Pulslänge des Lastsignals von einem momentanen Betrag der mittels des Meßwandlers erfaßten Meßgröße abhängig ist, insb. derart, daß bei einem für das Meßsystem vorgegeben minimalen Betrag der Meßgröße nämliche Pulslänge kleiner ist als bei einem im vergleichsweise größeren Betrag nämlicher Meßgröße; und/oder
- wobei eine momentane Pausenlänge des Lastsignals von einem momentanen Betrag der mittels des Meßwandlers erfaßten Meßgröße abhängig ist, insb. derart, daß bei einem für das Meßsystem vorgegeben minimalen Betrag der Meßgröße nämliche Pausenlänge größer ist als bei einem vergleichsweise größeren Betrag nämlicher Meßgröße; und/oder
- wobei ein momentanes Puls-zu-Pausen-Verhältnis von einem momentanen Betrag der mittels des Meßwandlers erfaßten Meßgröße abhängig ist, insb. derart, daß bei einem für das Meßsystem vorgegeben minimalen Betrag nämlicher Meßgröße nämliches Puls-zu-Pausen-Verhältnis kleiner ist als bei einem vergleichsweise größeren Betrag nämlicher Meßgröße.

14. Meßsystem nach einem der Ansprüche 11 bis 13, wobei die Umformer-Elektronik an eine davon entfernte Meß- und Versorgungseinheit angeschlossen ist, insb. derart, daß die Umformer-Elektronik für den Betrieb der Treiberschaltung erforderliche elektrische Leistung von der Meß- und Versorgungseinheit bezieht.

15. Meßsystem nach dem vorherigen Anspruch, wobei die Umformer-Elektronik mittels der Meß- und Betriebsschaltung generierte Meßdaten, insb. jeweils eine Massendurchflußrate eines in einer Rohrleitung strömenden Mediums repräsentierende Massendurchfluß-Meßwerte, jeweils eine Dichte eines Mediums repräsentierende Dichte-Meßwerte, oder jeweils eine Viskosität eines Mediums repräsentierende Viskositäts-Meßwerte, an die Meß- und Versorgungseinheit, insb. durch Modulation eines in einer in der Umformer-Elektronik vorgesehene Zweileiter-Anschlußschaltung (MAU) fließenden Stromes, übermittelt.

## Claims

1. Driver circuit for an actuator, particularly for an electromechanical, electro-acoustic or electromagnetic exciter of a physical-electrical transducer, said driver circuit comprising:
- a voltage regulator (UR_{T}), which is configured to deliver a first DC voltage (U_{NT}) at a regulator output, particularly a DC voltage regulated to a predefinable target value and/or constantly having a value of more than 1.5 V and less than 20 V;
- a DC voltage converter (DC/DC), wherein the first DC voltage (U_{NT}), which is delivered by the voltage regulator and is particularly occasionally less than a predefined voltage threshold value and/or varies within a predefined voltage interval, is applied to said voltage converter on the primary side, said voltage converter being configured to convert said first DC voltage into a second DC voltage (U'_{NT}), which can be measured on the secondary side and is particularly variable and/or particularly always less than 3 V;
- an end stage operated by means of the second DC voltage (U'_{NT}), said end stage being configured to convert a control signal (sin_{exc_A}), particularly a bipolar control signal and/or at least intermittently periodic control signal, into a driver signal (i_{exc}) for the transducer, particularly a bipolar driver signal and/or at least intermittently periodic driver signal, wherein said control signal is particularly applied to a signal input, particularly a high-impedance signal input and/or a signal input having an input resistance of more than 10 kΩ; and
- an overload detector for detecting an overload situation of the voltage regulator, particularly by comparing the first DC voltage (U_{NT}) delivered by the voltage regulator at the output with a voltage threshold value predefined for this purpose and/or by comparing the electrical power, which is output at the output of the voltage regulator, with a power threshold value predefined for this purpose, and to generate a load signal (en), particularly also driving the DC voltage converter (DC/DC) and/or a binary load signal;
- wherein the second DC voltage (U'_{NT}) has a value that is consistently less than a value of the first DC voltage (U_{NT}),
- wherein the driver signal (i_{exc}) has an electrical power that is higher than an electrical power (Pₛᵢₙ) of the control signal (sin_{exc_A}) ;
- wherein the load signal (en) is configured to
-- signal, with a first signal level, that the voltage regulator is overloaded and/or that the electrical power demand of the DC voltage converter (DC/DC) is currently higher than an electrical power currently available at the output of the voltage regulator, or
-- signal, with a second signal level that is different from the first signal level, that the voltage regulator is not overloaded and/or that the electrical power currently available at the output of the voltage regulator is sufficient to cover the electrical power demand of the DC voltage converter (DC/DC);
- wherein the DC voltage converter (DC/DC) has a control input (EN) to switch the DC voltage converter (DC/DC) on and off, wherein the load signal (en) generated by the overload detector is supplied to said control input (EN); and
- wherein the DC voltage converter (DC/DC) is configured in such a way that
- the DC voltage converter (DC/DC) is switched off when the load signal has adopted the first signal level, particularly in such a way that the DC voltage converter (DC/DC) delivers the second DC voltage (U'_{NT}) with a value less than 1 V and/or allows an effective input current (I_{N1}) of less than 100 µA to flow, said input current being driven by the first DC voltage (U_{NT}), and
- the DC voltage converter (DC/DC) is switched on when the load signal has adopted the second signal level, particularly in such a way that the DC voltage converter (DC/DC) delivers the second DC voltage (U'_{NT}) with a value greater than 1 V and/or allows an effective input current (I_{NT}) greater than 0.5 mA to flow, said input current being driven by the first DC voltage.

2. Driver circuit as claimed in the previous claim,
- wherein the voltage regulator is configured to provide its output with a fluctuating electrical power, particularly in such a way that the electrical power demand of the DC voltage converter (DC/DC) is occasionally greater than an electrical power currently available at the output of the voltage regulator; and/or
- wherein the voltage regulator is configured to supply a first DC voltage (U_{NT}) with a value occasionally below a predefined voltage threshold value; and/or
- wherein the DC voltage converter (DC/DC) is designed as a switching regulator, particularly only operated in a pulse frequency modulation mode; and/or
- wherein the DC voltage converter (DC/DC) is designed as a step-down converter, particularly clocked with a rectangular signal (PFM) modulated in its period duration.

3. Driver circuit as claimed in one of the previous claims, wherein the load signal is designed at least temporarily as a non-periodic clock signal with a varying pulse length and/or with a varying pause length and/or a varying pulse-to-pause ratio.

4. Driver circuit as claimed in the previous claim,
- wherein a current pulse length of the load signal is dependent on the electrical power currently available at the output of the voltage regulator, particularly in such a way that at a minimum electrical power predefined for the driver circuit, the pulse length is smaller than at a comparatively higher electrical power, or that said pulse length increases with increasing electrical power; and/or
- wherein a current pause length of the load signal is dependent on the electrical power currently available at the output of the voltage regulator, particularly in such a way that at a minimum electrical power predefined for the driver circuit, the pause length is greater than at a comparatively higher electrical power, or that said pause length decreases with increasing electrical power; and/or
- wherein a current pulse-to-pause ratio of the load signal is dependent on the electrical power currently available at the output of the voltage regulator, particularly in such a way that at a minimum electrical power predefined for the driver circuit, the pulse-to-pause ratio is smaller than at a comparatively higher electrical power, or that said pulse-to-pause ratio increases with increasing electrical power.

5. Driver circuit as claimed in one of the previous claims, further comprising a digital-to-analog converter (D/A), particularly operated by the second DC voltage (U'_{NT}), which is designed to generate the control signal (sin_{exc_A}).

6. Driver circuit as claimed in one the previous claim, wherein a reference voltage of the digital-to-analog converter (D/A) is formed by the second DC voltage (U'_{NT}), said reference voltage being proportional to the second DC voltage.

7. Transmitter electronics module with a driver circuit as claimed in one of the previous claims and with a measuring and operation circuit for at least one measuring signal delivered by a physical-electrical transducer, particularly a vibronic type transducer or a HF transmission/reception transducer, said transducer having an actuator, particularly for an electromechanical, electro-acoustic or electromagnetic exciter.

8. Transmitter electronics module as claimed in the previous claim,
- wherein the measuring and operation circuit comprises a signal generator, which generates a digital signal (sin_{exc_D}) that serves to generate the control signal (sin_{exc_A}); and/or
- wherein the measuring and operation circuit has a voltage regulator (UR_{M}), which supplies a third DC voltage (U_{NM}) at a regulator output, said voltage being particularly regulated to a predefined target value and/or having a value of more than 1 V, as well as a microcomputer (DSP) operated using the third DC voltage (U_{NM}) and/or designed as a digital signal processor.

9. Transmitter electronics module as claimed in one of the Claims 7 to 8, further comprising a two-wire connection circuit (MAU) to connect the transmitter electronics module to a measurement and power unit situated at a distance from it.

10. Transmitter electronics module as claimed in the previous claim,
- wherein the two-wire connection circuit (MAU) is configured to draw the electrical power that is needed for the operation of the driver circuit from the measurement and power unit, particularly via a current loop (4 mA to 20 mA); and/or
- wherein the two-wire connection circuit (MAU) is configured to transmit measurement data generated using the measuring and operation circuit to the measurement and power unit, particularly by modulating a current flowing through the two-wire connection circuit (MAU) and/or serving to provide electrical power for the driver circuit and/or the measuring and operation circuit.

11. Measuring system with a, particularly intrinsically safe, transmitter electronics module, as claimed in one of the Claims 7 to 10 and with a physical-electrical transducer that is connected to the module's driver circuit and its measuring and operation circuit, particularly a vibronic-type transducer with at least one vibrating measuring tube, designed to generate at least one measuring signal depending on or corresponding to a physical measured variable, particularly variable and/or fluctuating, particularly a mass flow rate and/or a density and/or a viscosity of a fluid conducted in a pipe or a level of a bulk product stored in a vessel.

12. Measuring system as claimed in the previous claim,
- wherein a value of the DC voltage (U_{N2}) currently delivered by the voltage regulator of the measuring and operation circuit is independent of a current value of the measured variable captured by the transducer; and/or
- wherein a maximum electrical power currently available at the output of the voltage regulator of the measuring and operation circuit is independent of a current value of the measured variable captured by the transducer; and/or
- wherein the transducer has at least one measuring tube which is excited to produce mechanical vibrations using the actuator, particularly designed as an electrodynamic vibration generator and/or formed by means of a plunger-coil arrangement; and/or
- wherein a maximum electrical power currently available at the output of the voltage regulator of the operating circuit depends on a current value of the measured variable captured by the transducer, particularly in such a way that the maximum electrical power currently available increases as the value of the measured variable increases, and/or that the maximum electrical power currently available decreases as the value of the measured variable decreases, and/or in such a way that at a minimum value of said measured variable predefined for the measuring system, the maximum electrical power currently available is smaller than at a maximum value of said measured variable predefined for the measuring system.

13. Measuring system as claimed in one of the Claims 11 to 12, each in connection with Claim 3,
- wherein a current pulse length of the load signal depends on a current value of the measured variable captured by the transducer, particularly in such a way that at a minimum value of the measured variable, predefined for the measuring system, the pulse length is smaller than at a comparatively higher value of said measured variable; and/or
- wherein a current pause length of the load signal depends on a current value of the measured variable captured by the transducer, particularly in such a way that at a minimum value of the measured variable, predefined for the measuring system, the pause length is bigger than at a comparatively higher value of said measured variable; and/or
- wherein a current pulse-to-pause ratio depends on a current value of the measured variable captured by the transducer, particularly in such a way that at a minimum value of said measured variable, predefined for the measuring system, said pulse-to-pause ratio is smaller than at a comparatively higher value of said measured variable.

14. Measuring system as claimed in one of the Claims 11 to 13, wherein the transmitter electronics module is connected to a measurement and power unit located at a distance from said electronics module, particularly in such a way that the transmitter electronics module draws the electrical power required for the operation of the driver circuit from the measurement and power unit.

15. Measuring system as claimed in the previous claim, wherein the transmitter electronics module transmits measured data generated by the measuring and operation circuit - particularly mass flow measured values representing a mass flow rate of a medium flowing through a pipe, density measured values representing a density of a medium, or viscosity measured values representing a viscosity of a medium - to the measurement and power unit particularly by modulating a current flowing in a two-wire connection circuit (MAU) provided in the transmitter electronics.

## Revendications

1. Circuit d'attaque pour un actionneur, notamment pour un excitateur électromécanique, électroacoustique ou électromagnétique d'un transducteur physico-électrique, lequel circuit d'attaque comprend :
- un régulateur de tension (UR_{T}), lequel est configuré de telle sorte à délivrer, sur une sortie du régulateur, une première tension continue (U_{NT}), notamment régulée par rapport à une consigne prédéfinissable et/ou dont la valeur est constamment supérieure à 1,5 V et inférieure à 20 V ;
- un convertisseur continu-continu (DC/DC), auquel est appliquée, côté primaire, la première tension continue (U_{NT}) délivrée par le régulateur de tension, tension continue dont la valeur est notamment occasionnellement inférieure à un seuil de tension prédéfini et/ou est notamment variable dans un intervalle de tension prédéfini, et lequel convertisseur est configuré de telle sorte à convertir cette première tension continue en une deuxième tension continue (U'_{NT}) pouvant être prélevée côté secondaire, laquelle est notamment variable et/ou notamment constamment inférieure à 3 V ;
- un étage final commandé au moyen de la deuxième tension continue (U'_{NT}), lequel étage final est configuré de telle sorte à convertir le signal de commande (sin_{exc_A}), notamment haute impédance et/ou appliquée à une entrée de signal présentant une résistance d'entrée supérieure à 10 kΩ, notamment bipolaire et/ou au moins temporairement périodique, en un signal d'attaque (i_{exc}) pour le transducteur, lequel signal d'attaque est notamment bipolaire et/ou au moins temporairement périodique ; ainsi que
- un détecteur de surcharge destiné à détecter une situation de surcharge du régulateur de tension, notamment par comparaison de la première tension continue (U_{NT}) délivrée à la sortie du régulateur de tension avec un seuil de tension prédéfini à cette fin et/ou par comparaison de la puissance électrique fournie à la sortie du régulateur de tension avec un seuil de puissance prédéfini à cette fin, et pour la génération d'un signal de charge (en), notamment pilotant le convertisseur continu-continu (DC/DC) et/ou binaire ;
- la deuxième tension continue (U'_{NT}) présentant une valeur constamment inférieure à une valeur de la première tension continue (U_{NT}),
- le signal d'attaque (i_{exc}) présentant une puissance électrique, qui est supérieur à une puissance électrique (Pₛᵢₙ) du signal de commande (sin_{exc_A}) ;
- le signal de charge (en) étant configuré de telle sorte à
-- signaler, avec un premier niveau de signal, que le régulateur de tension est surchargé et/ou qu'un besoin du convertisseur continu-continu (DC/DC) en puissance électrique est momentanément supérieur à une puissance électrique disponible momentanément à la sortie du régulateur de tension, ou
-- signaler, avec un deuxième niveau de signal différent du premier niveau de signal, que le régulateur de tension n'est pas surchargé et/ou que la puissance électrique momentanément disponible à la sortie du régulateur de tension est suffisante pour couvrir le besoin du convertisseur continu-continu (DC/DC) en puissance électrique ;
- le convertisseur continu-continu (DC/DC) présentant une entrée de commande (EN) destinée à activer ou à désactiver le convertisseur continu-continu (DC/DC), à laquelle entrée de commande (EN) est acheminé le signal de charge (en) généré par le détecteur de surcharge ; et
- le convertisseur continu-continu (DC/DC) étant configuré de telle sorte
- que le convertisseur continu-continu (DC/DC) est désactivé lorsque le signal de charge a adopté le premier niveau de signal, notamment de telle sorte que le convertisseur continu-continu (DC/DC) délivre la deuxième tension continue (U'_{NT}) avec une valeur inférieure à 1 V et/ou laisse circuler un courant d'entrée efficace (I_{N1}), généré par la première tension continue (U_{NT}), inférieur à 100 µA, et
- que le convertisseur continu-continu (DC/DC) est activé lorsque le signal de charge a adopté le deuxième niveau de signal, notamment de telle sorte que le convertisseur continu-continu (DC/DC) délivre la deuxième tension continue (U'_{NT}) avec une valeur supérieure à 1 V et/ou laisse circuler un courant d'entrée efficace (I_{NT}), généré par la première tension continue (U_{NT}), supérieur à 0,5 mA.

2. Circuit d'attaque selon la revendication précédente,
- pour lequel le régulateur de tension est configuré de telle sorte à mettre à disposition à sa sortie une puissance électrique fluctuante, notamment de telle sorte qu'un besoin du convertisseur continu-continu (DC/DC) en puissance électrique est occasionnellement supérieur à une puissance électrique momentanément disponible à la sortie du régulateur de tension ; et/ou
- pour lequel le régulateur de tension est configuré de telle sorte à délivrer la première tension continue (U_{NT}) avec une valeur située occasionnellement sous un seuil de tension prédéfini ; et/ou
- le convertisseur continu-continu (DC/DC) étant conçu en tant que régulateur à découpage, notamment piloté exclusivement dans un mode de modulation de fréquence par impulsions ; et/ou
- le convertisseur continu-continu (DC/DC) étant conçu en tant que convertisseur abaisseur, notamment cadencé avec un signal rectangulaire (PFM) modulé dans sa durée de période.

3. Circuit d'attaque selon l'une des revendications précédentes, pour lequel le signal de charge est conçu au moins temporairement en tant que signal d'horloge apériodique d'une longueur d'impulsion variable et/ou d'une longueur de pause variable avec un rapport impulsion/pause variable.

4. Circuit d'attaque selon la revendication précédente,
- pour lequel une longueur d'impulsion momentanée du signal de charge est dépendante de la puissance électrique disponible momentanément à la sortie du régulateur de tension, notamment de telle sorte que dans le cas d'une puissance électrique minimale prédéfinie pour le circuit d'attaque, la longueur d'impulsion est inférieure à celle dans le cas d'une puissance électrique comparativement supérieure, ou de telle sorte qu'à une puissance électrique croissante, la longueur d'impulsion augmente ; et/ou
- pour lequel une longueur de pause momentanée du signal de charge est dépendante de la puissance électrique disponible momentanément à la sortie du régulateur de tension, notamment de telle sorte que dans le cas d'une puissance électrique minimale prédéfinie pour le circuit d'attaque, la longueur de pause est supérieure à celle dans le cas d'une puissance électrique comparativement supérieure, ou de telle sorte qu'à une puissance électrique croissante, la longueur de pause diminue ; et/ou
- pour lequel un rapport impulsion/pause momentané du signal de charge est dépendant de la puissance électrique disponible momentanément à la sortie du régulateur de tension, notamment de telle sorte que dans le cas d'une puissance électrique minimale prédéfinie pour le circuit d'attaque, le rapport impulsion/pause est inférieur à celui dans le cas d'une puissance électrique comparativement supérieure, ou de telle sorte qu'à une puissance électrique croissante, le rapport impulsion/pause augmente.

5. Circuit d'attaque selon l'une des revendications précédentes, comprenant en outre un convertisseur numérique-analogique (D/A), notamment commandé au moyen de la deuxième tension continue (U'_{NT}), destiné à la génération du signal de commande (sin_{exc_A}).

6. Circuit d'attaque selon la revendication précédente, pour lequel une tension de référence proportionnelle du convertisseur numérique-analogique (D/A) est formée au moyen de la deuxième tension continue (U'_{NT}).

7. Électronique de transmetteur avec un circuit d'attaque selon l'une des revendications précédentes et avec un circuit de mesure et de commande pour au moins un signal de mesure délivré par un transducteur physico-électrique, notamment un transducteur du type à vibrations ou un convertisseur d'émission / réception HF, lequel transducteur comporte un actionneur, notamment pour un excitateur électromécanique, électro-acoustique ou électromagnétique.

8. Électronique de transmetteur selon la revendication précédente,
- pour lequel le circuit de mesure et de commande comprend un générateur de signaux, qui génère un signal numérique (sin_{exc_D}) servant à la génération du signal de commande (sin_{exc_A}) ; et/ou
- pour lequel le circuit de mesure et de commande comporte un régulateur de tension (UR_{M}), qui fournit sur une sortie de régulateur une troisième tension continue (U_{NM}), notamment régulée par rapport à une consigne prédéfinie et/ou présentant une valeur supérieure à 1 V, ainsi qu'un micro-ordinateur (DSP) commandé au moyen de la troisième tension continue (U_{NM}) et/ou conçu en tant que processeur de signal numérique.

9. Électronique de transmetteur selon l'une des revendications 7 à 8, comprenant en outre un circuit de raccordement bifilaire (MAU) destiné au raccordement de l'électronique de transmetteur à une unité de mesure et d'alimentation située à distance de l'électronique.

10. Électronique de transmetteur selon la revendication précédente,
- pour lequel le circuit de raccordement bifilaire (MAU) est configuré de telle sorte à prélever, pour le fonctionnement du circuit d'attaque, la puissance électrique requise à partir de l'unité de mesure et d'alimentation, notamment via une boucle de courant (4 mA à 20 mA) ; et/ou
- pour lequel le circuit de raccordement bifilaire (MAU) est configuré de telle sorte à transmettre à l'unité de mesure et d'alimentation les données de mesure générées au moyen du circuit de mesure et de commande, notamment par la modulation d'un courant circulant dans le circuit de raccordement bifilaire (MAU) et/ou servant à la fourniture de la puissance électrique pour le circuit d'attaque et/ou le circuit de mesure et de commande.

11. Système de mesure avec une électronique de transmetteur, notamment à sécurité intrinsèque, selon l'une des revendications 7 à 10 et avec un transducteur physico-électrique à la fois relié avec son circuit d'attaque et son circuit de mesure et de commande, notamment un transducteur du type à vibrations avec au moins un tube de mesure vibrant, destiné à la génération d'au moins d'un signal de mesure dépendant ou correspondant à une grandeur de mesure physique, notamment variable et/ou fluctuante, notamment un débit massique et/ou une densité et/ou une viscosité d'un fluide acheminé dans une conduite, ou un niveau d'un produit en vrac stocké dans un réservoir.

12. Système de mesure selon la revendication précédente,
- pour lequel une valeur de la tension continue (U_{N2}) délivrée momentanément par le régulateur de tension du circuit de mesure et de commande est indépendante d'une valeur momentanée de la grandeur de mesure saisie au moyen du transducteur ; et/ou
- pour lequel une puissance électrique maximale momentanément disponible à la sortie du régulateur de tension du circuit de mesure et de commande est indépendante d'une valeur momentanée de la grandeur de mesure saisie au moyen du transducteur ; et/ou
- pour lequel le transducteur comporte au moins un tube de mesure excité en vibrations mécaniques au moyen d'un actionneur, notamment conçu en tant qu'excitateur de vibrations électrodynamique et/ou au moyen d'un actionneur conçu en tant que dispositif de bobine à noyau plongeur ; et/ou
- pour lequel une puissance électrique maximale momentanément disponible à la sortie du régulateur de tension du circuit de commande dépend d'une valeur momentanée de la grandeur de mesure saisie au moyen du transducteur, notamment de telle sorte qu'avec une valeur croissante de la grandeur de mesure la puissance électrique maximale momentanément disponible augmente, et/ou de telle sorte qu'avec une valeur décroissante de la grandeur de mesure la puissance électrique maximale momentanément disponible diminue, et/ou de telle sorte qu'avec une valeur minimale de la grandeur de mesure, prédéfinie pour le système de mesure, la puissance électrique maximale momentanément disponible est inférieure à celle avec une valeur maximale de la grandeur de mesure, prédéfinie pour le système de mesure.

13. Système de mesure selon l'une des revendications 11 à 12, respectivement en relation avec la revendication 3,
- pour lequel une longueur d'impulsion momentanée du signal de charge dépend d'une valeur momentanée de la grandeur de mesure saisie au moyen du transducteur, notamment de telle sorte qu'avec une valeur minimale de la grandeur de mesure, prédéfinie pour le système de mesure, la longueur d'impulsion est inférieure à celle avec une valeur comparativement supérieure de la même grandeur de mesure ; et/ou
- pour lequel une longueur de pause momentanée du signal de charge dépend d'une valeur momentanée de la grandeur de mesure saisie au moyen du transducteur, notamment de telle sorte qu'avec une valeur minimale de la grandeur de mesure, prédéfinie pour le système de mesure, la longueur de pause est supérieure à celle avec une valeur comparativement supérieure de la même grandeur de mesure ; et/ou
- pour lequel un rapport impulsion/pause momentané dépend d'une valeur momentanée de la grandeur de mesure saisie au moyen du transducteur, notamment de telle sorte qu'avec une valeur minimale de la grandeur de mesure, prédéfinie pour le système de mesure, le rapport impulsion/pause est inférieur à celui avec une valeur comparativement supérieure de la même grandeur de mesure.

14. Système de mesure selon l'une des revendications 11 à 13, pour lequel l'électronique de transmetteur est raccordée à une unité de mesure et d'alimentation distante de l'électronique, notamment de telle sorte que l'électronique de transmetteur prélève la puissance électrique requise pour le fonctionnement du circuit d'attaque à partir de l'unité de mesure et d'alimentation.

15. Système de mesure selon la revendication précédente, pour lequel l'électronique de transmetteur transmet à l'unité de mesure et d'alimentation les données de mesure générées au moyen du circuit de mesure et de commande, notamment respectivement des valeurs mesurées de débit massique représentant un débit massique d'un produit s'écoulant dans une conduite, des valeurs mesurées de densité représentant une densité du produit ou des valeurs mesurées de viscosité représentant une viscosité d'un produit, notamment par modulation d'un courant circulant dans un circuit de raccordement bifilaire (MAU) prévu dans l'électronique de transmetteur.
